**Europäisches Patentamt**

**European Patent Office**

**Office européen des brevets**

(19)

(11) Publication number: **0 415 525 A1**

# EUROPEAN PATENT APPLICATION

(21) Application number: **90307189.2**

(22) Date of filing: **02.07.90**

(51) Int. Cl.⁵: **B65G 23/06**

The title of the invention has been amended (Guidelines for Examination in the EPO, A-III, 7.3).

(30) Priority: **30.06.89 US 374214**

(43) Date of publication of application:
**06.03.91 Bulletin 91/10**

(84) Designated Contracting States:
**DE GB**

(71) Applicant: **HALBACH & BRAUN INDUSTRIES**
**90 West Chestnut Street, Millcraft Center**
**Washington, Pennsylvania 15301(US)**

(72) Inventor: **Papenbrock, Hans-Josef**
**144 Paul Street**
**Washington, Pennsylvania 15301(US)**

(74) Representative: **Cheyne, John Robert**
**Alexander Mackenzie et al**
**HASELTINE LAKE & CO. 28 Southampton**
**Buildings Chancery Lane**
**London WC2A 1AT(GB)**

(54) **Frame for drive shaft of chain conveyor.**

(57) A drive frame (10) for a longwall conveyor system is provided. A shaft (12), shaft bearings (14, 16), keys (60, 70), seals (46, 56), rings (40, 50) and ring disks (46, 56) form a removable cartridge which is mounted within the drive frame (10). The removable cartridge makes it easier to replace and/or repair the shaft (12), shaft bearings, (14, 16) or other part of the cartridge.

FIGURE 2

## FRAME FOR DRIVE SHAFT

Field of the Invention

This invention relates to mining equipment and, more specifically, a drive frame for a longwall conveyor system having a removable drive shaft cartridge.

Background Information

A longwall conveying system is an integral part of underground coal mining operations. After coal is cut from the longwall by a cutting machine, it is transported by the longwall conveying system to a dumping point. From this dumping point, the coal is transported by other means to a central loading point for further processing. A drive frame in a longwall conveyor system is used to provide a housing for a drive shaft mounted on bearings, which is rotated by a drive unit comprised of a motor, gearbox, and the appropriate couplings. A sprocket assembly is mounted on the shaft and engages a common link chain. As the shaft rotates, and thus the sprocket assembly and chain, scrapers attached to the chain move, transporting mined coal along the line pan of the conveyor to a discharge point. If a piece of equipment breaks down in the transportation phase of the coal mine, the entire longwall operation comes to a halt until the equipment is repaired. Using conveyor system designed under the prior art, the down time needed to replace a broken bearing or shaft in the longwall conveyor system can be extensive, costing the mine operator financial losses.

In order to reduce the down time, and the resultant financial losses, the mine operator must be able to quickly, and efficiently, remove and replace those parts most prone to damage - the shaft and/or the shaft bearings of the longwall conveyor system, in addition to various seals, rings, and ring disks. Under a prior art system, the shaft and shaft bearings are mounted in a split housing, vertically or horizontally, formed by a frame and a frame cap. The split is centered over the axial midplane of the shaft. The gear box for the drive frame is mounted on the drive frame and over the split in the housing. There are several disadvantages to this system. To remove the shaft and/or the shaft bearings, the frame cap must be removed from the frame. The quill shaft, which connects the gear box to the shaft, must also be removed. A solid sprocket arrangement is also mounted on the shaft, complicating the replacement of the shaft.

When the split housing system is properly operating, problems can arise. Since the housing is split, the frame and the frame cap must be attached to each other, most often with bolts, to ensure proper operation of the drive frame. However, during operation of the drive frame, the chain, which is driven by a sprocket assembly mounted on the shaft, can oftentimes jam, causing large torsion forces to be transferred from the chain, through the sprocket and shaft, to the housing, since the chain stretches when jammed. When the chain unjams or releases, the force is relieved as the chain snaps back to its original shape. The constant application and release of the force on the split housing causes the bolts that hold the frame cap to the frame to loosen or stretch. This invariably can cause the shaft and/or shaft bearings to fail because of the inherent transfer of force on the frame and/or frame cap to the shaft and/or shaft bearings. If the split in the housing is vertical, it can be appreciated that bolts needed to attach the frame cap to the frame will be subjected to tensile and compression forces whereas if the split is horizontal, the bolts will be subjected to shear forces.

Another disadvantage that exists in other prior art systems is when the shaft and/or shaft bearings must be removed to be replaced or repaired. In order to remove the shaft and/or shaft bearings, the gear box trust be removed. Then, various cover plates, bearing housings and associated seals must be removed before access to the shaft and/or shaft bearings can be achieved.

Thus, it is advantageous to have a drive frame having a one-piece housing where the removal of the shaft and/or shaft bearings as a unit can be accomplished expeditiously, both in terms of time and money. Furthermore, it is advantageous to have a drive frame that does not require the complete disassembly of the drive frame and gear box in order to access the shaft and/or shaft bearings.

SUMMARY OF THE INVENTION

This invention provides a drive frame for a longwall conveying system. The system compriseg a housing, a shaft, et least two shaft bearings, bearing housings end seals. The shaft and shaft bearings can be assembled to form a cartridge. The cartridge is mounted in the housing so that the shaft can be rotated on the shaft bearings. A sprocket assembly is removably mounted to the shaft portion of the cartridge such that the sprocket assembly rotates with the shaft. Removing the sprocket assembly from the shaft permits the removal of the cartridge from the housing.

The invention also provides a drive frame for a longwall conveying system. The system comprises a housing and cartridge, the cartridge comprised of a shaft and at least two shaft bearings mounted on the shaft. The cartridge is mounted within the housing to permit the shaft to rotate on the shaft bearings. A sprocket assembly is removably mounted on the shaft such that the sprocket assembly rotates with the shaft. Removing the sprocket assembly from the shaft permits the cartridge to be removed from the housing.

The invention further provides a drive frame for a longwall conveying system. The system comprises a housing and a cartridge, the cartridge comprised of a shaft, at least two shaft bearings mounted on the shaft, at least two keys and means for mounting the keys on the shaft. The cartridge is mounted within the housing to permit the shaft to rotate on the shaft bearings. A sprocket assembly having at least two keyways adapted to engage the keys is removably mounted on the shaft such that the sprocket assembly rotates with the shaft. Removing the sprocket assembly from the shaft permits the cartridge to be removed from the housing.


BRIEF DESCRIPTION OF THE DRAWINGS


The invention may be understood, and further advantages and uses thereof are readily apparent, when considered in view of the following detailed description of preferred embodiments, staken with the accompanying drawings in which:

Figure 1 shows a top plan view of the drive frame constructed according to the provisions of the invention;

Figure 2 shows a vertical cross-section of Figure 1 taken through line A-A; and

Figure 3 shows a partial cross-section of Figure 2 taken through line B-B.


DETAILED DESCRIPTION OF THE PREFERRED EMBODIMENT


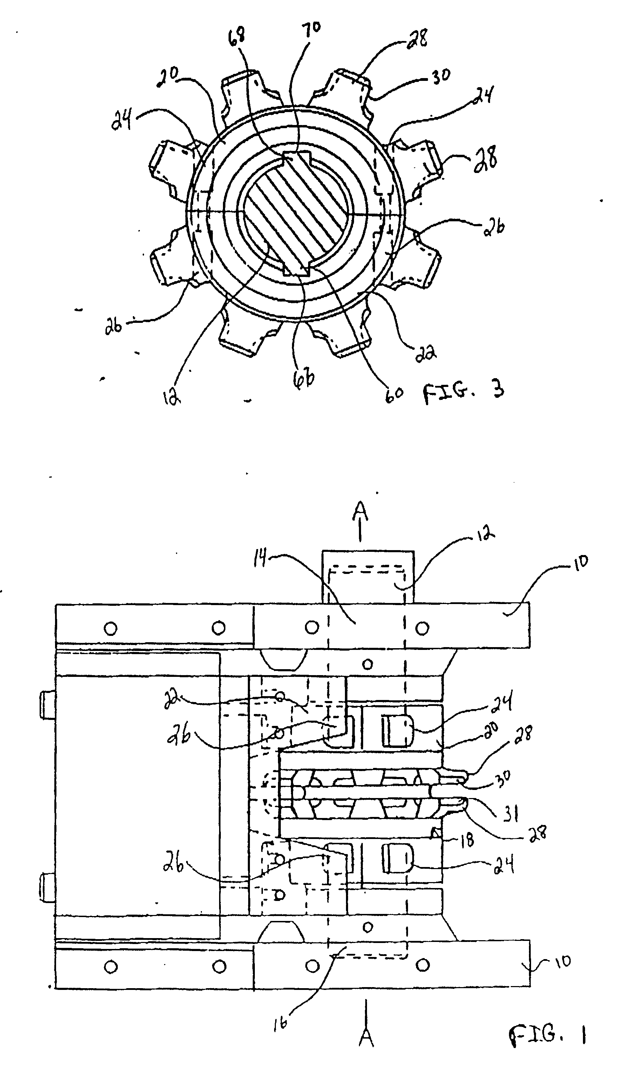

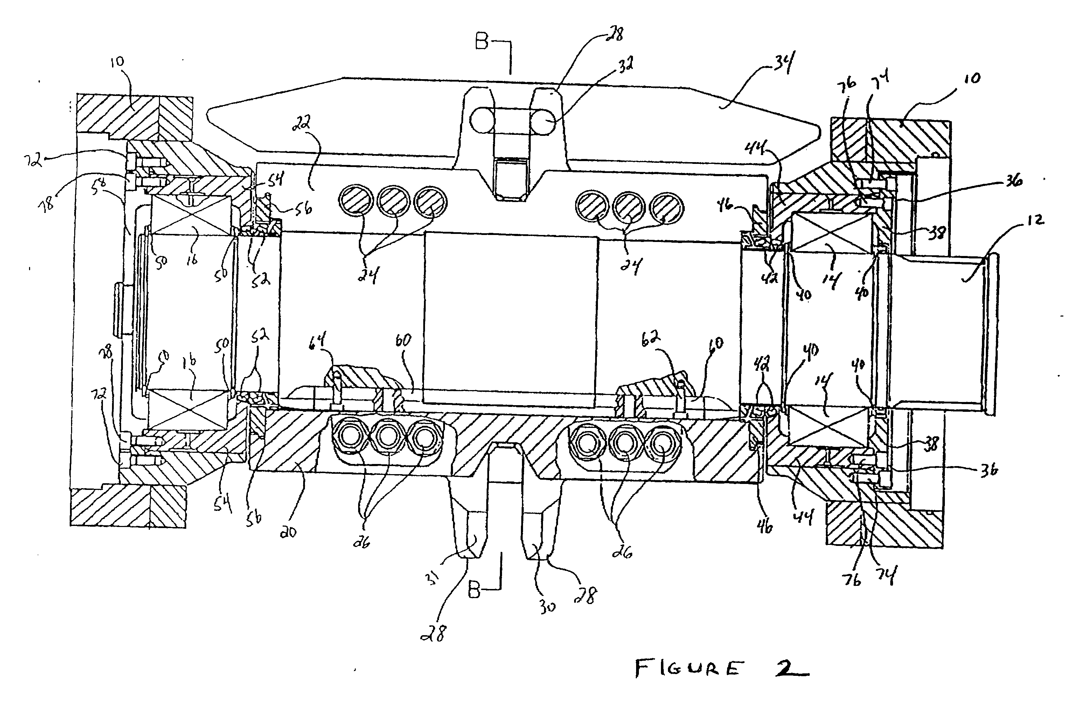

Figure 1 shows a top plan view of drive frame 10. Removably mounted within drive frame 10 are shaft bearings 14 and 16, which are adapted to receive shaft 12 such that shaft 12 can rotate on shaft bearings 14 and 16. Sprocket assembly 18 is comprised of sprocket halves 20 and 22. Sprocket halves 20 and 22 are mounted on shaft 12 by securing halves 20 and 22 together with bolts 24 and nuts 26. Chain sprocket teeth 28, of which several are mounted on sprocket halves 20 and 22, engages chain link 32, of a complete chain not shown. Those of ordinary skill in the art will appreciate that recesses 30 and 31 of teeth 28 will engage those links of the chain which lid in a plane perpendicular to teeth 28. As shaft 12, and subsequently sprocket assembly 18, rotates, the chain will be moved by the engagement of link 32 with recesses 30 and 31. It will also be appreciated by those of ordinary skill in the art that scraper 34 is attached to the chain by means well known in the art. Scraper 34, and others not shown, when moved by the chain, causes coal loaded on the line pan (not shown) to move from the longwall conveyor system to a dumping point as discussed above. Those of ordinary skill in the art will appreciate that more than one pair of teeth can be mounted on the sprocket assembly so that more than one chain can be utilized in the longwall conveyor system.

Shaft 12, shaft bearings 14 and 16, keys 60 and 70, retention bolts 62 and 64, bearing housings 44 and 54, cover plates 38 and 58, seal rings 42 and 52, seal ring disks 46 and 56, and retaining rings 40 and 50 form a removable cartridge. Shaft bearings 14 and 16 are mounted in housing 10 on bearing housings 44 and 54 respectively. Retaining rings 40 and 50 ensure proper placement of bearings 14 and 16 on shaft 12. Bearing housings 44 and 54 ensure proper placement of shaft bearings 14 and 16 in the housing, and thus proper alignment of shaft 12 in housing 10. Seal rings 42 and 52, together with seal ring disks 46 and 56 ensure retainment of lubrication in the cartridge. The design of the cartridge as such that the lubrication system is totally contained therein. An outer retaining ring 36 is fastened by bolts 74 to housing 10 in its respective position and covers the end of housing 10 where shaft 12 engages with a gear box (not shown), whose construction and use are well known to those of ordinary skill in the art. The gear box is then coupled to a motor by means well known in the art. Plate 38 is mounted on bearing housing 44 by bolts 76 and is part of the cartridge.

Sprocket assembly 18 is mounted on shaft 12, as discussed above. To permit sprocket assembly 18 to rotate with shaft 12, a pair of keys 60 and 70 (only one shown) are mounted on shaft 12 using, for example, retention bolts 62 and 64 although other mounting means could be used. Mounting keys 60 and 70 opposite to each other is but one way to mount the keys on shaft 12, as those of ordinary skill in the art will appreciate. Keys 60 and 70 interlock keyways 66 and 68 of sprocket halves 22 and 20 respectively. See Figure 3. The interlocking of keys 60 and 70 in keyways 66 and 68 permits sprocket assembly 18 to rotate as shaft 12 rotates and to prevent slippage between sprocket assembly 18 and shaft 12 from occurring.

To remove the cartridge from the drive frame, the chain is cut and is disengaged from the sprocket teeth. Bolts 24 and nuts 26 are removed from sprocket assembly 18. Sprocket halves 20 and 22 are then removed from shaft 12. Retention bolt 72 which connects cover plate 58 to its respective position on drive frame 10 are then removed. Ring 36 remains mounted in the housing after the cartridge is removed. Cover plates 38 and 58 remain bolted to their respective positions on bearing housings 44 and 54, respectively, such that the cartridge formed is a sealed unit. The unit can then be removed from the drive frame, repaired, and then remounted into the drive frame.

## Claims

1. Drive frame for longwall conveying system comprising:
a housing;
a shaft;
at least two shaft bearings, said shaft and said shaft bearings adopted to be assembled as a cartridge and mounted within said housing to permit said shaft to be rotated on said shaft bearings; and
a sprocket assembly removably mounted to said shaft for rotation therewith,
removal of said sprocket permitting removal of said shaft and said shaft bearings as a cartridge from said housing.

2. Drive frame for longwall conveying system comprising:
a housing;
a cartridge, said cartridge further compriging a shaft; and at least two shaft bearings mounted on said shaft;
means for mounting said cartridge within said housing to permit said shaft to be rotated on said shaft bearings; and
a sprocket assembly removably mounted to said shaft for rotation therewith;
removal of said sprocket assembly permitting the removal of said cartridge from said housing.

3. The drive frame of claim 2 wherein said cartridge further comprises at least two keys; and means for mounting said keys on said shaft, and wherein said sprocket assembly has at least two keyways adapted for engagement with said keys.

4. The drive frame of claim 3 wherein said cartridge further comprises housings for said bearings; at least two seal rings; ring disks for said seal rings; and a cover plate.

5. Drive frame for longwall conveying system comprising:
a housing;
a cartridge, said cartridge further comprising
a shaft;
at least two shaft bearings;
at least two keys; and
means for mounting said keys on said shaft;
means for mounting said cartridge in said housing to permit said shaft to rotate on said bearings; and
a sprocket assembly having at least two keyways adapted for engagement with said keys. said sprocket removably mounted to said shaft for rotation therewith;
removal of said sprocket assembly permitting the removal of said cartridge from said housing.

6. The drive frame of claim 5 wherein said cartridge further comprises housings for said bearings; at least two seal rings; ring disks for said seal rings; and a cover plate.

FIG. 3

FIG. 1

FIGURE 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 044 632 (M.M.D. DESIGN & CONSULTANCY LTD) * Page 2, lines 27-38; fig. * | 1,2 | B 65 G 23/06 |
| A | | 5 | |
| Y | FR-A-1 379 885 (HALBACH & BRAUN) * Whole document * | 1,2 | |
| A | FR-A-1 568 648 (H. JÖRG) * Abstract point 2; fig. * | 1 | |
| A | BE-A- 572 564 (GEBR. EICKHOFF) * Page 2, lines 8-17; fig. * | 3,5 | |

TECHNICAL FIELDS
SEARCHED (Int. Cl.5)

B 65 G
F 16 H
B 02 C

The present search report has been drawn up for all claims

| Place of search | Date of completion of the search | Examiner |
|---|---|---|
| THE HAGUE | 03-10-1990 | VAN ROLLEGHEM F.M. |

EPO FORM 1503 03.82 (P0401)